Europäisches Patentamt

European Patent Office

Office européen des brevets

(11) Veröffentlichungsnummer: **0 139 841**
**B1**

## EUROPÄISCHE PATENTSCHRIFT

(45) Veröffentlichungstag der Patentschrift:
03.06.87

(21) Anmeldenummer: 84107233.3

(22) Anmeldetag: 23.06.84

(51) Int. Cl.⁴: **B 29 C 49/48**

(54) Verfahren und Vorrichtung zum Herstellen eines Hohlkörpers aus thermoplastischem Material im Blasverfahren.

(30) Priorität: **29.07.83 DE 3327419**

(43) Veröffentlichungstag der Anmeldung:
08.05.85 Patentblatt 85/19

(45) Bekanntmachung des Hinweises auf die Patenterteilung:
03.06.87 Patentblatt 87/23

(84) Benannte Vertragsstaaten:
AT BE DE FR GB IT NL SE

(56) Entgegenhaltungen:
DE - A - 2 704 225
DE - A - 2 825 097
US - A - 3 764 644
US - A - 3 821 344
US - A - 3 844 698
US - A - 4 307 059

(73) Patentinhaber: **Kautex-Werke Reinold Hagen Aktiengesellschaft, D-5300 Bonn-Holzlar 1 (DE)**

(72) Erfinder: **Schwochert, Hans-Joachim, Am Quintengarten 23, D-5300 Bonn 3 (DE)**

(74) Vertreter: **Koepsell, Helmut, Dipl.-Ing., Mittelstrasse 7, D-5000 Köln 1 (DE)**

**Beschreibung**

Die Erfindung betrifft ein Verfahren und eine Vorrichtung zum Herstellen eines Hohlkörpers aus thermoplastischem Material im Blasverfahren, dessen Wandung mit wenigstens einem Loch versehen ist, wobei ein vorzugsweise schlauchförmiger Vorformling des Hohlkörpers in eine Blasform gebracht und darin unter Anwendung inneren Überdrucks bis zur Anlage an der inneren Begrenzung der Blasformwandung aufgeweitet wird, worauf die noch nicht völlig erhärtete Wandung des Hohlkörpers durch ein durch eine Öffnung der Blasformwandung in das Innere desselben eine Durchdringungsbewegung ausführendes Lochwerkzeug mit dem Loch versehen und der Hohlkörper nach ausreichender Abkühlung aus der Hohlform entfernt wird.

Bei einem durch die US-A-3 821 344 bekannten derartigen Verfahren und Vorrichtung, tritt beim Aufweiten des Vorformlings Material in die in der Wandung der Blasform befindliche Öffnung ein, die dazu dienen soll, an dem herzustellenden Hohlkörper einen zweiten Hals anzuformen. Nach Beendigung des Aufweitvorganges wird zu einem Zeitpunkt, zu welchem das thermoplastische Material noch heiss, also plastisch verformbar ist, ein Lochwerkzeug in das Innere der Blasform hineinbewegt, wobei im Verlauf dieser Bewegung die Wandung des in der Blasform befindlichen Hohlkörpers durchstossen und letzterer mit einem Loch versehen wird, das durch einen Hals oder einen Stutzen begrenzt ist. Wenngleich das bekannte Verfahren es erlaubt, Löcher grösseren Durchmessers, beispielsweise mit einem Durchmesser von einigen Zentimetern, herzustellen, kann es bei der üblichen Massenherstellung derartiger Hohlkörper schwierig sein, bestimmte Abmessungen des Lochs und der diese umgebenden Bereiche, auch bezüglich der Wanddicke derselben, einzuhalten. Dies ist im wesentlichen darauf zurückzuführen, dass es nicht ohne weiteres vorhersehbar und bestimmbar ist, in welchem Umfang und unter Annahme welcher Gestalt das thermoplastische Material während des Aufweitvorganges in die unverschlossene Öffnung eintritt. Vielmehr wird dies von einer Reihe von Faktoren beeinflusst, die von Herstellungszyklus zu Herstellungszyklus schwanken können, wobei Art und Ausmass der Schwankungen ebenfalls nicht vorhersehbar und kaum beeinflussbar sind. Es kann sich dabei z.B. um die Viskosität und die Wanddicke des Vorformlinges handeln. Die Viskosität wiederum kann von der Temperatur abhängig sein, die ebenfalls innerhalb bestimmter Grenzen gewissen Schwankungen unterliegen kann. Bei geringerer Viskosität und geringerer Wanddicke wird das Material im allgemeinen schneller und/oder weiter in die unverschlossene Öffnung hineingedrückt werden als dies bei höherer Viskosität und grösserer Wandstärke der Fall ist. Es wird auch nicht möglich sein, den in Abhängigkeit von diesen Schwankungen optimalen Zeitpunkt für das Vorbewegen des Lochwerkzeuges zu wählen, da die Bewegungen des Lochwerkzeuges im allgemeinen zeitabhängig gesteuert werden. Zudem ist es nicht oder nur mit unvertretbarem Aufwand möglich, im Verlaufe des Aufweitvorganges den jeweilige Zustand im Bereich der Öffnung zu erfassen. Sehr hohe Qualitätsanforderungen können deshalb bei Anwendung des bekannten Verfahrens nicht erfüllt werden, zumal die Schwankungen hinsichtlich der Abmessungen des Loches und der es umgebenden Bereiche auch ein in vielen Anwendungsfällen erforderliches nachträgliches Anbringen zusätzlicher Teile im Bereich des Lochs erschweren.

Durch die DE-A-2 704 225 sind ein Verfahren und eine Vorrichtung zum Herstellen eines mit Perforationen versehenen Blasformteiles bekannt, bei welchem unmittelbar nach dem Aufweiten des Vorformlinges eine Vielzahl von Nadeln durch die Wand des Hohlkörpers geführt und nach dem Abkühlen desselben daraus wieder entfernt wird. Dabei ist auch hier die Wandung der Blasform mit einer entsprechenden Anzahl von Öffnungen versehen, durch die die Nadeln in das Innere der Blasform und damit durch die Wandung des noch plastischen Hohlkörpers hindurchgeführt werden. Auch hier sind die Öffnungen beim Aufweitvorgang unverschlossen. In der DE-A-2 704 225 wird dazu die Auffassung vertreten, dass die Nadeln, deren dem Blasforminneren zugekehrten Enden sich während des Aufweitvorganges in einem kurzen Abstand von der die Blasform innenseitig begrenzenden Wandung befinden, ein Eindringen des thermoplastischen Materials in die Öffnungen verhindern. Dies mag bei stirnseitig flachen, also nicht spitz zulaufenden Nadeln der Fall sein, wobei dann auch vorauszusetzen wäre, dass die Nadeln während des Aufweitvorganges mit ihrer Stirnseite bündig mit der inneren Begrenzung der Blasform abschliessen. Bei einem Lochwerkzeug mit grösseren Querschnittsabmessungen, beispielsweise jenen gemäss US-A-3 821 344, ist jedoch ein spitzes Lochwerkzeug unerlässlich, um den angestrebten Effekt, nämlich die Herstellung eines Lochs, zu erzielen. Im übrigen ist es bei der Fertigung von Hohlkörpern der in der DE-A-2 704 225 beschriebenen Art ohnehin nicht von grosser Bedeutung, wie im einzelnen das thermoplastische Material beim Aufweitvorgang in die Öffnungen der Blasformwandung eindringt, da einmal aufgrund der sehr geringen Querschnittsabmessungen dieser Öffnungen das Eindringen begrenzt bleiben muss und zum anderen die Funktion der herzustellenden Perforationen und das Aussehen derselben bzw. des Hohlkörpers dadurch keine Beeinträchtigung erfahren, da die Öffnungen und die sie unmittelbar umgebenden Bereiche zu klein sind, als dass irgendwelche Unregelmässigkeiten sich nachteilig auswirken könnten.

Der Erfindung liegt die Aufgabe zugrunde, Verfahren und Vorrichtung der eingangs beschriebenen Art, bei welchem spanlos Löcher an Hohlkörpern angebracht werden, so auszugestalten, dass der Aufweitvorgang innerhalb der Blasform, insbesondere Gestalt und Verlauf der Wandbereiche des Hohlkörpers, an denen ein Loch anzubringen ist, vorherbestimmbar und somit von Arbeitszyklus zu Arbeitszyklus gleich sind. Es sollen somit die Voraussetzungen auch für hohe Qualitätsansprüche geschaffen werden, wie sie heute in vielen Fällen, z.B. bei der Fertigung von technischen Teilen, erfüllt werden müssen. Derartige Tanks sind im allgemeinen mit mehreren Öffnungen zu versehen, von denen nicht alle in der üblichen Weise durch Pressformen unter Verwendung des für die Zuführung des Druckmittels vorhandenen Blasdornes hergestellt werden können. Ferner soll es möglich sein, Zusatzteile (Einlegeteile) gleichzeitig mit der Herstellung des Loches im Bereich des letzteren derart anzubringen, dass in jedem Fall die richtige Position des Zusatzteiles am Hohlkörper und die erforderliche Dichtigkeit gewährleistet sind.

Zur Lösung dieser Aufgabe schlägt die Erfindung vor, dass während des Aufweitvorganges und bis zur Herstellung des Loches zur Abstützung des mit dem Loch zu versehenden Bereiches der Wandung die Öffnung in der Blasformwandung verschlossen bleibt und der die Abstützung bewirkende Bereich der Blasformwandung erst zwecks Freigabe der Öffnung für das Lochwerkzeug entfernt wird. Durch diese Verfahrensführung ist eine Gewähr dafür gegeben, dass während des Aufweitvorganges innerhalb der Blasform auch im Bereich des anzubringenden Lochs definierte, d.h., vorherbestimmte und festgelegte Verhältnisse bezüglich der Formgebung vorhanden sind mit dem Ergebnis, dass von Arbeitszyklus zu Arbeitszyklus der Wandbereich, an dem das Loch anzubringen ist, eine eindeutig bestimmte Lage einnimmt und somit eine von Arbeitszyklus zu Arbeitszyklus sich wiederholende nach Umfang, Ablauf und Zeitdauer den üblichen Gegebenheiten entsprechende Aufweitung erfahren hat. Somit liegen beim Vorbewegen des Lochwerkzeuges in die Form hinein und durch die Wandung des darin befindlichen Hohlkörpers hindurch immer die gleichen Voraussetzungen vor: Die Wandung des Hohlkörpers nimmt immer die gleiche, vorherbestimmte Lage ein, wenn das Lochwerkzeug auf sie einwirkt, wobei auch die Schwankungen bezüglich Temperatur, Wanddicke und dgl. das übliche Mass nicht überschreiten. Insbesondere gilt dies für die Temperatur, da das Ausmass der Abkühlung, welches die Wandung des Hohlkörpers im Bereich des herzustellenden Lochs innerhalb einer bestimmten Zeitspanne erfährt, mit der üblichen Genauigkeit festgestellt bzw. berechnet werden kann und sich im übrigen nicht wesentlich von der Temperatur der anderen Bereiche des Hohlkörpers unterscheiden muss. Dies ist im Gegensatz zu dem Verfahren gemäss US-A-3 821 344 insbesondere darauf zurückzuführen, dass auch im Bereich des herzustellenden Lochs das thermoplastische Material an seiner Aussenseite zunächst an einem — entfernbaren — Bereich der Formwandung anliegt. Die dabei eintretende Kühlung ist schneller und insbesondere besser definierbar als im Falle des Verfahrens gemäss der US-PS, bei welchem der Bereich der Hohlkörperwandung, an dem das Loch herzustellen ist, aussenseitig zumindest teilweise mit der Formwandung nicht in Berührung kommt, wobei nicht einmal genau vorhersehbar ist, wie gross dieser Bereich ist, der zudem aus den einleitend erwähnten Gründen von Arbeitszyklus zu Arbeitszyklus sich ändern kann.

Zwar besteht auch bei Anwendung des Verfahrens gemäss der Erfindung die Notwendigkeit, die aussenseitige Abstützung des Wandbereiches, an welchem das Loch anzubringen ist, kurz vor dem Zeitpunkt aufzuheben, zu welchem das Lochwerkzeug durch die Wandung hindurchgestossen wird. Der Zeitpunkt kann jedoch in Abhängigkeit von den jeweiligen Gegebenheiten gewählt werden, insbesondere von der Grösse des Lochs und dem Ausmass der Verfestigung, die das Material bis zu diesem Zeitpunkt erfahren hat. Im allgemeinen wird das Lochwerkzeug durch die Hohlkörperwandung gestossen werden, wenn diese noch eine gewisse Plastizität aufweist. Zwar besteht auch die Möglichkeit, das Loch erst zu einem Zeitpunkt herzustellen, zu welchem der Hohlkörper innerhalb der Blasform soweit erkaltet ist, dass die Wandung sich verfestigt. Hierbei wäre allerdings mit der Möglichkeit der Bildung von Rissen oder dgl. zu rechnen. Dies wird in jedem Fall vermieden, wenn das Loch zu einem früheren Zeitpunkt hergestellt wird, bei welchem jedoch die Hohlkörperwandung zumindest an ihrer der Blasformwandung zugekehrten Seite bereits eine derartige Verfestigung erfahren hat, dass auch nach Wegfall der Abstützung im Bereich der Öffnung eine ungewollte, insbesondere nach Ausmass und Gestalt nicht vorhersehbare Verformung nicht eintritt. Im übrigen besteht auch die Möglichkeit, auf den mit dem Loch zu versehenden Bereich der Hohlkörperwandung nach der Freigabe der Öffnung für das Lochwerkzeug von aussen einen über dem Atmosphärendruck liegenden Druck zur Einwirkung zu bringen. Dieser Druck kann dem innerhalb der Blasform herrschenden Druck angepasst sein, so dass keine Druckdifferenz entsteht. Ggf. kann dazu auch der Druck im Hohlkörper, also innerhalb der Blasform, gegenüber dem beim Aufweiten herrschenden Druck etwas abgesenkt werden. Aufgrund der bereits erwähnten teilweisen Verfestigung des die Hohlkörperwandung bildenden Materials ist es im allgemeinen, falls die Anwendung eines aussenseitigen Überdruckes — bezogen auf die Atmosphäre — überhaupt notwendig ist, ausreichend, aussenseitig einen geringeren Druck als innerhalb der Blasform auf die Hohlkörperwandung zur Einwirkung kommen zu lassen.

Es kann vorteilhaft sein, das Lochwerkzeug während des Durchdringens der Hohlkörperwandung zusätzliche Bewegungen ausführen zu lassen. Dabei kann es sich um kontinuierliche oder oszillierende Drehbewegungen und/oder oszillierende Bewegungen parallel zur Längsachse handeln. Durch diese Bewegungen wird das Durchdringen des die Wandung bildenden thermoplastischen Materials erleichtert.

Die Erfindung sieht weiterhin die Möglichkeit vor, dass ein Einlegeteil während des Aufweitvorganges mit der Wandung des Hohlkörpers verbunden wird, welches mit einem Durchgang versehen ist, der mit dem Loch in der Wandung des Hohlkörpers fluchtet, wobei der Durchgang im Einlegeteil während des Aufweitvorganges verschlossen bleibt und das Lochwerkzeug durch den im Einlegeteil befindlichen Durchgang zur Durchdringung der Wandung des Hohlkörpers verschoben wird, nachdem der die Abstützung bewirkende, entfernbare Bereich der Blasformwandung aus dem Durchgang entfernt worden ist. Dabei kann das Einlegeteil während des Aufweitvorganges die dem herzustellenden Loch benachbarten Bereiche der Wandung des Hohlkörpers abstützen. D.h., dass insoweit das Einlegeteil einen Bereich der Blasformwandung bildet, der allerdings nicht entfernbar ist, sondern mit dem herzustellenden Hohlkörper — im allgemeinen durch Schweissen — verbunden wird.

Das Einlegeteil kann durch den entfernbaren, die Abstützung bewirkenden Bereich der Wandung in die gewünschte Position in der Blasform gebracht und dort gehalten werden, bis die Verbindung mit dem herzustellenden Hohlkörper erfolgt ist. In diesem Fall dient das entfernbare Wandteil zugleich als Halterung und Führungsmittel für das Einlegeteil. Es kann aber auch so verfahren werden, dass das Einlegeteil vor Herstellung des Loches in einer entsprechenden Ausnehmung oder einer sonstigen, an der eigentlichen Blasform angebrachten Halterung angeordnet wird.

Vorteilhaft ist die Vorrichtung zur Durchführung des Verfahrens gemäss der Erfindung so ausgebildet, dass die Blasformwandung im Bereich der Öffnung ein bewegbares Wandteil aufweist, welches in einer seiner Positionen die in der Bewegungsbahn des Lochwerkzeuges liegende Öffnung verschliesst und in einer anderen freigibt.

Das Lochwerkzeug ist zweckmässig als auf einer an die Öffnung anschliessenden Bewegungsbahn hin- und herbewegbarer Dorn ausgebildet, der in der üblichen Weise an seinem dem Blasforminneren zugekehrten Ende sich verjüngend ausgebildet ist.

Gemäss einem weiteren Vorschlag der Erfindung kann das bewegbare Wandteil als entlang einer an die Öffnung anschliessenden Bewegungsbahn hin- und herbewegbarer Dorn ausgebildet sein, dessen Querschnitt an seinem dem Forminneren zugekehrten Ende dem Querschnitt der Öffnung angepasst ist. Dabei können die beiden Bewegungsbahnen, die im allgemeinen durch Führungsbohrungen in der Blasformwandung oder Fortsätzen derselben gebildet sein werden, für das dornartige verschiebbare Wandteil und das Lochwerkzeug unter einem spitzen Winkel zueinander verlaufen und im Bereich der Öffnung in der Blasformwandung einander schneiden, wobei beide Teile wechselweise eine in Richtung auf das Blasforminnere vorgeschobene Position einnehmen.

Bei einer anderen Ausführungsform ist das bewegbare Wandteil mit einem Durchgang versehen, der in eine Lage bringbar ist, in welcher der Durchgang eine Verbindung zwischen Öffnung und Bewegungsbahn für das Lochwerkzeug herstellt. In einer davon abweichenden Position des bewegbaren Wandteils kann dieses die Öffnung verschliessen.

So kann das bewegbare Wandteil drehbar angeordnet und im Querschnitt zur Drehachse kreisförmig ausgebildet und mit einem radialen Durchgang für das Lochwerkzeug versehen sein, der in einer Winkelstellung des um eine zum Durchgang senkrechte Achse drehbaren Wandteils die Verbindung zwischen Bewegungsbahn des Lochwerkzeuges und der Öffnung in der Blasformwandung herstellt. Eine andere Möglichkeit sieht vor, dass die Öffnung für den Durchgang des Lochwerkzeugs am bewegbaren Wandteil angebracht und in Abhängigkeit von dessen Position mit dem Blasforminneren in Verbindung steht oder dem Blasforminneren gegenüber verschlossen ist. Dabei kann ein Hilfsdorn vorgesehen sein, der in einer Position des bewegbaren Wandteiles, in welcher die Bewegungsbahn des Lochwerkzeuges durch das Wandteil gesperrt ist, die dem Blasforminneren zugekehrte Öffnung des Durchganges verschliesst. Eine andere Möglichkeit sieht vor, dass das bewegbare Wandteil gegenüber dem Blasformnest nach aussen versetzt angeordnet ist, so dass die in ihm vorhandene Öffnung für den Durchgang des Lochwerkzeuges in der einen Endlage des Wandteiles hinter benachbarten Wandteilen zu liegen kommt. Dabei sollte das Ausmass der Verschiebung nicht kleiner sein als es der Querabmessung des Durchganges entspricht.

Gemäss einem weiteren Vorschlag der Erfindung kann die Öffnung in der Blasformwandung wenigstens an ihrem dem Forminneren zugekehrten Endbereich grösser sein als den Querabmessungen des in der Wandung des Hohlkörpers herzustellenden Loches entspricht, wobei der den Querschnittsbereich des herzustellenden Loches überschreitende Bereich der Öffnung durch ein Einlegeteil verschliessbar ist, durch dessen mit dem herzustellenden Loch fluchtenden Durchgang das Lochwerkzeug in Richtung auf das Innere der Blasform verschiebbar ist. Dabei kann das bewegbare Wandteil, welches in seiner einen Position die Öffnung verschliesst, an seinem dem Inneren der Blasform zugekehrten Ende mit einem Sitz für das Einlegeteil versehen sein.

In der Zeichnung sind einige Ausführungsbeispiele der Erfindung im Schema dargestellt. Es zeigen:

Fig. 1 den Längsschnitt durch eine Blasform mit daran angebrachtem Lochwerkzeug und einem diesem zugeordneten bewegbaren Formteil,

Fig. 2 in grösserem Massstab das Lochwerkzeug und das bewegbare Formteil mit letzterem in seiner wirksamen Stellung,

Fig. 3 eine der Fig. 2 entsprechende Darstellung mit dem Lochwerkzeug in seiner Position am Ende der Bewegung zur Herstellung eines Lochs in der Hohlkörperwandung,

Fig. 4-6 andere Ausführungsformen jeweils in der Darstellung der Figur 2,

Fig. 7 und 8 eine weitere Ausführungsform, die gleichzeitig mit der Herstellung des Loches in der Hohlkörperwandung die Anbringung eines Einlegeteiles ermöglicht,

Fig. 9 und 10 eine zweite Ausführungsform zur gleichzeitigen Anbringung von Einlegeteilen.

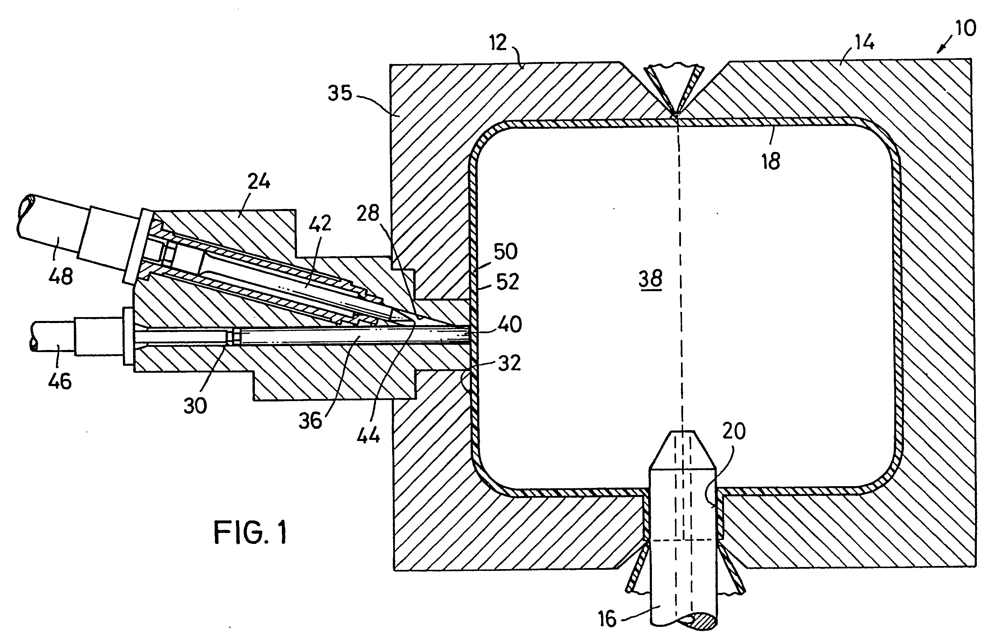

In Fig. 1 ist eine Blasform 10 dargestellt, die aus zwei Teilen 12 und 14 sowie einem Blasdorn 16 besteht, über den das im allgemeinen gasförmige Druckmittel in den aufzuweitenden Vorformling und den resultierenden Hohlkörper 18 eingeführt wird. Bei dem in Fig. 1 dargestellten Ausführungsbeispiel, das die Blasform 10 in ihrer Schliesslage zeigt, ist letztere hälftig unterteilt. Dies ist, wenngleich der häufigste Anwendungsfall, nicht immer möglich oder erforderlich. Im übrigen kann die Blasform auch in mehr als zwei Teile unterteilt sein.

Wenn der herzustellende Hohlkörper 18 mit mehr als der einen durch den Blasdorn 16 angeformten Öffnung 20 versehen werden soll, kann dies unter Verwendung einer der in den Figuren dargestellten Mittel geschehen, die jeweils an der Blasform angebracht sind und die Herstellung eines zusätzlichen Loches 22 ermöglichen, solange der Hohlkörper 18 sich noch in der Blasform 10 befindet.

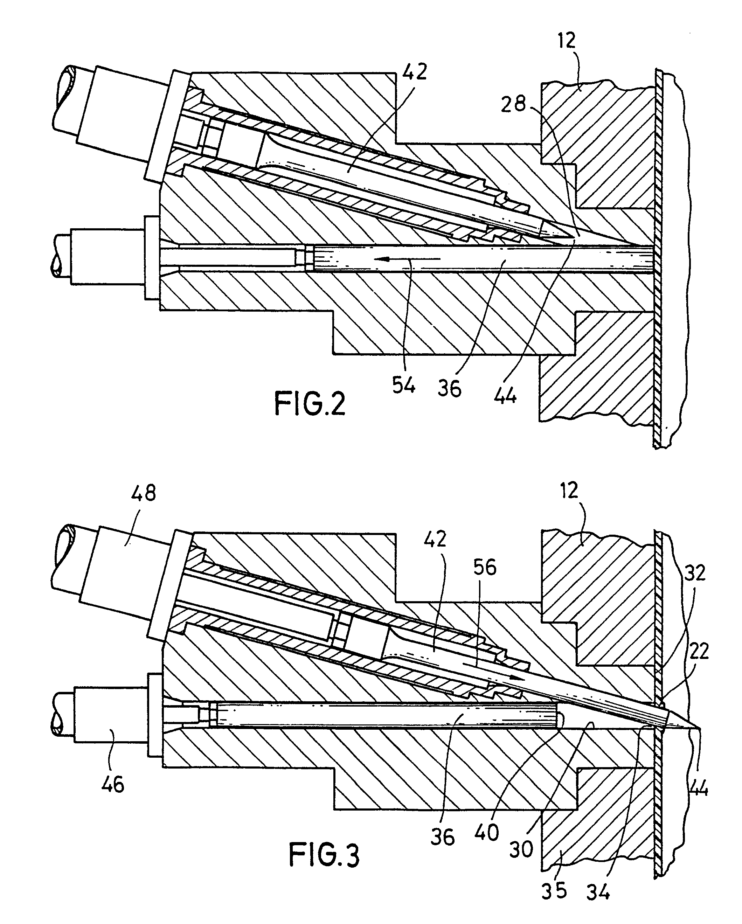

Zu diesem Zweck ist die Blasformhälfte 12 mit einem Fortsatz 24 versehen, der zwei Bohrungen 28 und 30 aufweist, die unter einem spitzen Winkel zueinander verlaufen und deren Mittellinien sich an der inneren Begrenzung 32, also an der der Formgebung für den herzustellenden Hohlkörper 18 dienenden Wandung der Blasform 10, schneiden, so dass sie eine gemeinsame Öffnung 34 in der Blasformwandung aufweisen. In der im wesentlichen senkrecht zum zugeordneten Bereich der Blasformwandung 35 verlaufenden Bohrung 30 ist ein Dorn 36 axial hin- und herverschiebbar angeordnet, der zumindest an seinem dem Inneren der Blasform 10, also dem Formnest 38 zugekehrten Ende mit Querschnittsabmessungen versehen ist, die denen der Öffnung 34 in diesem Bereich entsprechen, wobei lediglich soviel Spiel zwischen der inneren Begrenzungswandung der Öffnung 34 und der äusseren Begrenzungswandung des Dornes 36 vorgesehen ist, wie für die Durchführung der vorerwähnten Hin- und Herbewegung des Dornes erforderlich ist. D.h., dass in der in den Fig. 1 und 2 dargestellten Lage der Teile der Dorn 36 mit seinem dem Formnest 38 zugekehrten Ende die Öffnung 34 verschliesst, die die gemeinsame Mündung der beiden Kanäle 28 und 30 darstellt, wobei die Stirnfläche 40 des Dornes 36 bündig mit der das Formnest 38 begrenzenden Innenfläche 32 der Formwandung 35 abschliesst. Dies ist jedoch nicht in allen Fällen erforderlich oder erwünscht.

In der Bohrung 28 ist ein als Dorn 42 ausgebildetes Lochwerkzeug axial hin- und herverschiebbar angeordnet, der im Gegensatz zu dem mit einer flächigen, ebenen Stirnfläche versehenen Dorn 36 an seinem freien, dem Formnest 38 zugekehrten Ende derart sich verjüngend ausgebildet ist, dass er eine Spitze 44 aufweist.

Jeder der beiden Dorne 36 und 42 wird durch jeweils einen Zylinder 46 bzw. 48 axial hin- und herbewegt.

Die vorstehend beschriebene Vorrichtung wird in der Weise benutzt, dass in der üblichen Weise zunächst ein im allgemeinen schlauchförmiger Vorformling in die geöffnete Blasform eingebracht wird. Nach dem Schliessen der Blasform um den Vorformling wird dieser durch ein Druckmittel, im allgemeinen Druckluft, aufgeweitet. Während des Aufweitvorganges, der durch innerhalb des Vorformlinges herrschenden Überdruck bewirkt wird, nehmen die beiden Dorne 36 und 42 die in Fig. 1 und 2 jeweils dargestellte Lage ein. D.h., dass die in der Formwandung 35 befindliche Bohrung 30 zumindest an ihrem dem Formnest 38 zugekehrten Ende, also der Öffnung 34, durch den Endabschnitt des Dornes 36 verschlossen wird, so dass die die Form des herzustellenden Hohlkörpers 18 bestimmende Innenseite 32 der Formwandung 35 keinerlei Öffnung aufweist, also geschlossen ist. Das die Wandung 50 des herzustellenden Hohlkörpers bildende thermoplastische, zum Zeitpunkt des Aufweitvorganges und auch eine Zeitlang danach plastisch verformbare Material kann somit nicht in die Öffnung 34 eindringen. Vielmehr ist auch im Bereich der Öffnung 34 im Augenblick des Aufweitens, also wenn das die Hohlkörperwandung 50 bildende Material sich an die Innenseite 32 der Blasformwandung 35 anlegt, überall eine genau definierte feste Fläche vorhanden, die zwangsläufig dazu führt, dass auch die Hohlkörperwandung 50 an dieser Stelle eine genau definierte Lage innerhalb des Formnestes 38 einnimmt.

Spätestens mit der Beendigung des Aufweitvorganges, also unmittelbar nachdem die Wandung 50 des Hohlkörpers an der Innenfläche 32 der Formwandung 35 zur Anlage gekommen ist, beginnt eine intensivere Kühlung des thermoplastischen Materials, und zwar insbesondere durch Wärmeübergang von der Hohlkörperwandung 50 an die im allgemeinen gekühlte Blasformwandung 35. Da der die Hohlkörperwandung 50 bildende Kunststoff ein verhältnismässig schlechter Wärmeleiter ist, stellt sich innerhalb der Wandung 50 über deren Dicke ein Temperaturgefälle ein derart, dass die an der Blasformwandung anliegenden äusseren Bereiche der Hohlkörperwandung 50 eine stärkere Abkühlung erfahren als die der inneren Begrenzung 52 der Hohlkörperwandung 50 zugekehrten Bereiche, die überwiegend durch die innerhalb des Hohlkörpers zirkulierende Luft gekühlt werden. Dabei weist der mittlere Querschnittsbereich der Hohlkörperwandung normalerweise die höchste Temperatur auf, da die dort befindliche Wärme nur durch Abfliessen nach einer der beiden Seiten der Hohlkörperwandung 50 abgeleitet werden kann. Dies beansprucht aufgrund der erwähnten schlechten Wärmeleitfähigkeit des Kunststoffes eine gewisse Zeit.

Die vorerwähnte Temperaturverringerung, insbesondere in der an der Innenseite 32 der Formwandung 35 anliegenden äusseren Schicht der Hohlkörperwandung 50, hat gleichzeitig eine entsprechende Reduzierung der Plastizität des Kunststoffes zur Folge mit dem Ergebnis, dass dessen plastische Verformbarkeit sich verringert. Der thermoplastische Kunststoff wird nach einer bestimmten Zeit, deren Dauer insbesondere abhängt von der Dicke der Hohlkörperwand 50 und den Querschnittsabmessungen der Öffnung 34, einen Zustand erreichen, bei welchem die Wandung 50, obgleich noch nicht vollständig, ggf. sogar nur in geringem Umfang, insbesondere an der der Oberfläche 32 der Blasformwandung 35 zugekehrten Seite, verfestigt, zumindest für eine kurze Zeit auch unter der Einwirkung des inneren Überdruckes sich nicht wesentlich verformt. D.h., dass sie trotz des inneren Überdruckes nicht — jedenfalls nicht sofort — in die Mündung der beiden Kanäle 28, 30 eindringt bzw. hineingedrückt wird. Wenn dieser Zeitpunkt erreicht ist, wird der Dorn 36 durch entsprechende Betätigung des Zylinders 46 nach links, also in Richtung des Pfeiles 54 verschoben. Sobald die Stirnfläche 40 des Dornes 36 sich in einer nach links verschobenen Position befindet, in welcher der Dorn 36 den mit der Spitze 44 versehenen Dorn 42 nicht mehr behindert, wird dieser nach rechts, also in Richtung des Pfeiles 56 durch entsprechende Betätigung des Zylinders 48 verschoben, und zwar in die in Fig. 3 dargestellte Lage hinein. Dabei durchstösst die Spitze 44 des Dornes mit dem daran sich anschliessenden erweiternden Bereich die Hohlkörperwandung 50 im Bereich der Öffnung 34 unter Herstellung des Lochs 22. Die Bewegungen der beiden Dorne 36 und 42 können so schnell durchgeführt werden, dass sie insgesamt nur einige Zehntel Sekunden betragen.

Das Vorhandensein der stärker abgekühlten äussere Schicht der Hohlkörperwandung 50 hat einmal zur Folge, dass letztere, obwohl nur in verhältnismässig geringem Masse verfestigt, in der Lage ist, eine Verformung beim Auftreffen der Spitze 44 des Dornes 42 auf der Wandung derart, dass die Hohlkörperwandung 50 über einen grösseren Bereich von der Hohlformwandung abgehoben wird, zu verhindern. Ausserdem verhindert dieser abgekühlte Bereich, dass der die Hohlkörperwandung 50 in dem zu durchstossenden Bereich bildende Kunststoff an der Spitze des Dornes 42 anklebt. Andererseits ist die Hohlkörperwandung 50 noch so warm und damit plastisch verformbar, dass sie ohne Schwierigkeiten in die gewünschte Form bringbar ist. Insbesondere können das Durchstossen der Hohlkörperwandung 50 und damit das Herstellen des Lochs 22 durchgeführt werden, ohne dass die dabei bewirkte Verformung der Wandung 50, die sich insbesondere in den die herzustellende Öffnung 22 umgebenden Bereichen auswirkt, zu irgendwelchen unerwünschten Spannungen führt. Ausserdem kann das Durchstossen der Hohlkörperwand 50 auch dadurch erleichtert werden, dass der Dorn 42 eine Drehbewegung um seine Längsachse und/oder eine oszillierende Hin- und Herbewegung parallel zu seiner Längsachse ausführt.

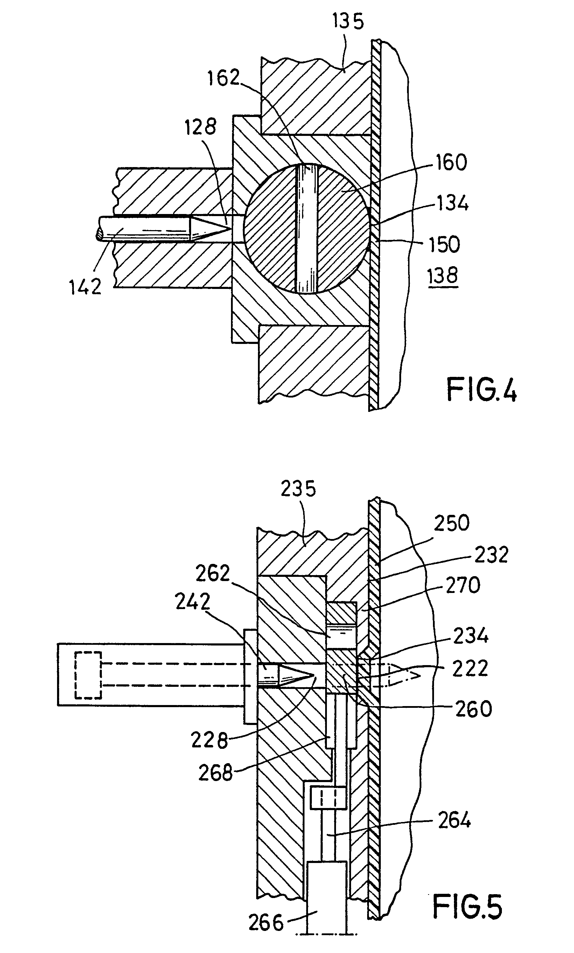

Die vorbeschriebenen Gegebenheiten gelten auch für die anderen Ausführungsbeispiele. In Fig. 4 der Zeichnung, in welcher mit dem Ausführungsbeispiel gemäss den Fig. 1 bis 3 übereinstimmende Teile mit gleichen, um jeweils 100 höheren Bezugszeichen versehen sind, ist der Öffnung 134 ein zylindrischer Körper 160 zugeordnet, der mit einem Durchgang 162 versehen ist. Der zylindrische Körper 160 ist um eine zum Durchgang 162 senkrecht verlaufende Achse derart drehbar, dass der Durchgang 162 in Verlängerung der durch eine Bohrung 128 definierten Führungsbahn für das als Dorn 142 ausgebildete Lochwerkzeug liegt. In der Lage der Teile gemäss Fig. 4 wird die Öffnung 134 durch die Mantelfläche des zylindrischen Körpers 160 verschlossen. Der Durchgang 162 verläuft im wesentlichen parallel zu dem die Öffnung 134 aufweisenden Bereich der Formwandung 135. Nach Beendigung des Aufweitvorganges und unmittelbar vor Herstellung des Loches wird der zylindrische Körper aus der in Fig. 4 dargestellten Lage um 90° um seine Längsachse verdreht, so dass der Durchgang 162 mit der Bohrung 128 fluchtet und der Dorn 142 durch die Wandung 150 des Hohlkörpers in das Formnest 138 vorbewegt werden kann.

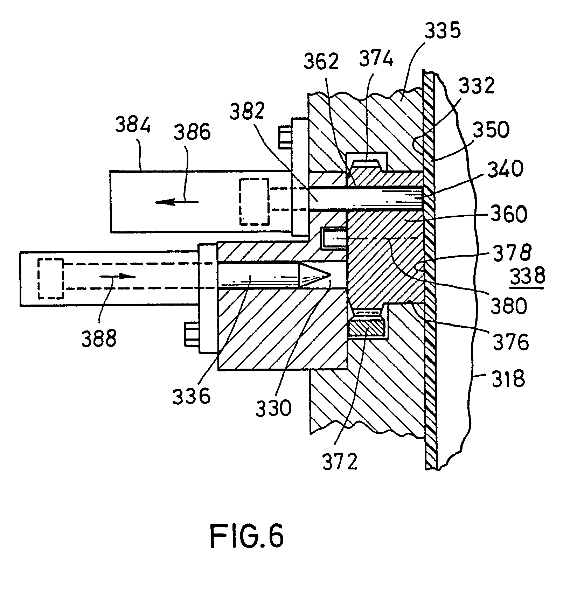

Beim Ausführungsbeispiel gemäss Figur 5, dessen dem Ausführungsbeispiel gemäss den Fig. 1 bis 3 entsprechende Teile mit gleichen, jedoch jeweils um 200 höheren Bezugszeichen versehen sind, ist der Öffnung 234 in der Formwandung 235 ein hin- und herbewegbarer Körper 260 zugeordnet, der mit der Kolbenstange 264 einer Zylinder-Kolbenanordnung 266 verbunden und innerhalb einer Ausnehmung 268 in der Formwandung 235 geführt ist. Dieser Körper 260 ist mit einem Durchgang 262 versehen, der in der einen Endstellung des Körpers 260 mit der durch eine Bohrung 228 gebildeten Führungsbahn für das ebenfalls als Dorn 242 ausgebildete Lochwerkzeug fluchtet. In dieser Lage kann durch Vorbewegen des Dornes 242 in die in der Zeichnung strichpunktiert dargestellte Position ein Loch in der Hohlkörperwandung 250 hergestellt werden.

Die Öffnung 234 befindet sich bei diesem Ausführungsbeispiel in einem Bereich der Blasformwandung 235, deren innere Begrenzung 232 nach aussen versetzt ist, so dass der das Loch 222 aufnehmende Bereich der Hohlkörperwandung 250 sich in einem Vorsprung des Hohlkörpers befindet. Dies zeigt eine Möglichkeit der Herstellung eines Loches, die von einem nach aussen vorspringenden stutzenförmigen Fortsatz am Hohlkörper begrenzt ist.

In der in Figur 5 dargestellten Lage der Teile bildet der bewegbare Körper 260 einen Teil der Blasformwandung, die die Öffnung 234 verschliesst. Dabei befindet sich der Durchgang 262 hinter dem der Öffnung 234 benachbarten Bereich 270 der Formwandung.

Bei dem Ausführungsbeispiel gemäss Fig. 6, bei welchem dem Ausführungsbeispiel gemäss den Fig. 1 bis 3 entsprechende Teile mit gleichen, jedoch um 300 höheren Bezugszeichen versehen sind, ist ein zylindrischer Körper 360 vorgesehen, der um eine Achse drehbar ist, die senkrecht zu dem Wandbereich des Hohlkörpers 318 verläuft, an dem das Loch hergestellt werden soll. Die Drehbewegung wird auf den Körper 360 durch eine Zahnstange 372 übertragen, die an einem am Körper 360 angebrachten Ritzel 374 angreift. Der zylindrische Körper 360 ist in einer Ausnehmung 376 der Formwandung 335 derart angeordnet, dass seine dem Formnest 338 zugekehrte Stirnfläche 378 einen Teil der Formwandung bildet. Die Stirnfläche 378 fluchtet mit den angrenzenden, feststehenden Bereichen der Wandung 335. Es ist aber auch möglich, die Anordnung so zu treffen, dass die Stirnfläche 378 gegenüber der inneren Begrenzung der Blasformwandung 332 in Richtung auf das Formnest 338 oder entgegengesetzt dazu versetzt verläuft.

Der zylindrische Körper 360 ist mit einem Durchgang 362 versehen, der parallel zur Drehachse 380, jedoch in einem Abstand von dieser verläuft. Bei der in der Zeichnung dargestellten Lage der Teile ist der Durchgang 362 durch einen Hilfsdorn 382 verschlossen, der durch eine Zylinder-Kolbenanordnung 384 parallel zur Achse 380 hin- und herbewegbar ist. Da beim Ausführungsbeispiel gemäss Figur 6 der Körper 360 über die gesamte Erstreckung seiner dem Formnest 338 zugekehrten Stirnfläche das Formnest begrenzt und somit der Durchgang 362 immer eine Lage einnimmt, in welcher er an seinem dem Formnest 338 zugekehrten Ende in dieses mündet, besteht die Notwendigkeit, den Durchgang bis unmittelbar vor Herstellung des Loches in der Hohlkörperwandung 350 zu verschliessen, damit verhindert wird, dass thermoplastisches Material in den Durchgang eindringt. Dazu dient der bereits erwähnte Hilfsdorn 382, dessen Stirnfläche 340 analog zur Stirnfläche 40 des Dornes 36 des Ausführungsbeispiels gemäss den Fig. 1 bis 3 die durch den Durchgang 362 gebildete Öffnung in der Blasformwandung verschliesst. Zur Herstellung des Loches in der Hohlkörperwandung 350 wird der Hilfsdorn 382 in Richtung des Pfeiles 386 aus dem Durchgang 362 herausbewegt, so dass nunmehr der Körper 360 durch entsprechende Betätigung der Zahnstange 372 um einen Winkel, hier etwa 180° gedreht werden kann, bei der der Durchgang 362 mit der durch eine Bohrung 330 gebildete Bewegungsbahn des als Dorn 336 ausgebildeten Lochwerkzeuges fluchtet. Alsdann wird der Dorn 336 in Richtung des Pfeiles 388 durch den Durchgang 362 und die Hohlkörperwandung zur Herstellung des gewünschten Loches bewegt.

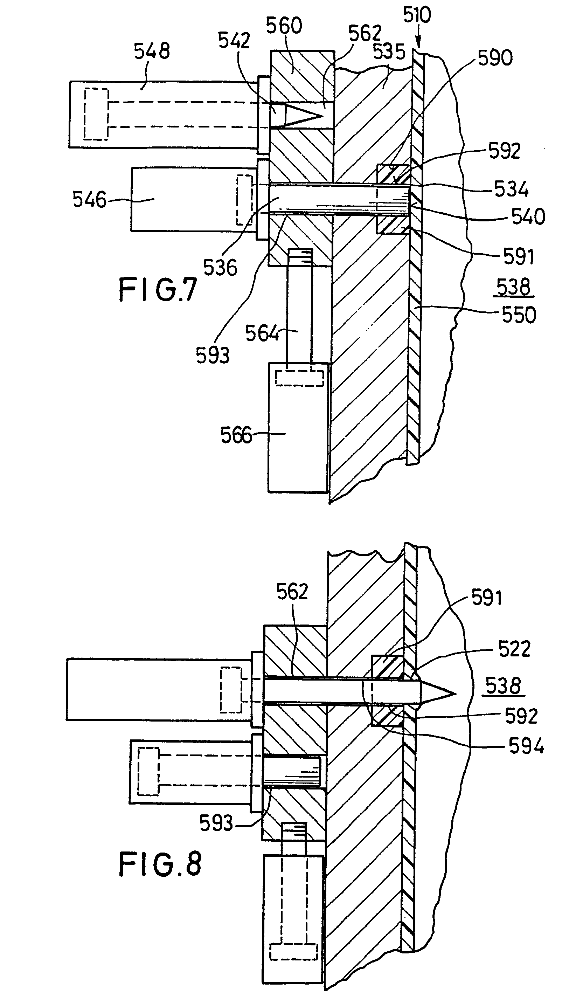

Das Ausführungsbeispiel gemäss den Figuren 7 und 8 entspricht in seinem grundsätzlichen Aufbau weitgehend dem gemäss Fig. 5, so dass entsprechende Teile mit gleichen, jedoch um jeweils 500 höheren Bezugszeichen versehen sind. Der wesentliche Unterschied gegenüber der Ausführungsform gemäss Fig. 5 besteht darin, dass die in der Formwandung 535 befindliche Öffnung für den Durchgang des das Lochwerkzeug darstellenden Dornes 542 mit einer Erweiterung 590 versehen ist, in die ein Einlegeteil 591 einlegbar ist, das einen Durchgang 592 aufweist. D.h., dass bei in der Erweiterung 590 eingesetztem Einlegeteil 591 dieses die Öffnung 534 bildet. Letztere verläuft koaxial zum Einlegeteil 591 und der es aufnehmenden Erweiterung 590, wenngleich in Abhängigkeit von der Funktion des Einlegeteils auch andere Ausgestaltungen denkbar sind. — Das Einlegeteil 591 kann aus thermoplastischem Kunststoff, der mit dem Material des Vorformlinges verschweissbar ist, bestehen, wenngleich das Einlegeteil auch aus anderen Werkstoffen hergestellt und z.B. mittels Kleben und/oder Formschluss mit der Hohlkörperwandung verbunden sein kann.

Der Wandung 535 der Blasform 510 ist im Bereich der Öffnung 534 ein hin- und herbewegbares Bauteil 560 zugeordnet, welches mit der Kolbenstange 564 einer Zylinder-Kolben-Anordnung 566 verbunden und entlang der Blasformwandung 535 an deren dem Formnest 538 abgekehrten Seite geführt ist. Dieses Bauteil ist mit zwei Durchgängen 562 und 593 versehen und zwischen den beiden in den Fig. 7 und 8 dargestellten Positionen hin- und herverschiebbar, wobei in der einen, in Fig. 7 dargestellten Position der Durchgang 593 und in der anderen, in Fig. 8 dargestellten Position der Durchgang 562 mit der Öffnung 534 bzw. dem dieser zugeordneten Bohrung gleichen Durchmessers 594 fluchtet. Dem Durchgang 593 ist ein Dorn 536 zugeordnet, der durch eine Zylinder-Kolben-Anordnung 546 betätigbar ist. Seine Stirnfläche 540 bildet den Bereich der Blasformwandung, der zwecks Freigabe der Öffnung 534 wegbewegt wird. Dem Dorn 542 ist eine Zylinder-Kolben-Anordnung 548 zugeordnet.

Die Vorrichtung wird in der Weise benutzt, dass zunächst, wenn die Teile beispielsweise die Lage gemäss Fig. 7 einnehmen, bei geöffneter Blasform 510 das Einlegeteil 591 in die die Öffnung umgebende Ausnehmung oder Erweiterung 590 eingelegt wird, nachdem ggf. seine dem Formnest 538 zugekehrte Seite erwärmt worden ist. Der Dorn 536 verschliesst dabei die Öffnung 534, die durch den Durchgang 592 des Einlegeteils 591 definiert wird. Die daran unmittelbar angrenzenden Bereiche der Erweiterung 590 werden durch das Einlegeteil 591 ausgefüllt, dessen dem Formnest 538 zugekehrte Stirnseite dort die Funktion der Blasformwandung übernimmt. Beim darauffolgenden Aufweiten des Vorformlinges wird dieser bzw. die Wandung 550 des daraus entstehenden Hohlkörpers gegen das Einlegeteil 591 gepresst, wobei, da das die Wandung 550 bildende thermoplastische Material noch warmplastisch ist, eine Schweissverbindung entsteht. Der Dorn 536 verhindert dabei, dass irgendwelches Material in die Öffnung 534 eintreten kann. Sobald das die Wandung 550 bildende Material eine ausreichende Abkühlung erfahren hat, wird der Dorn 536 in die in Fig. 8 dargestellte Lage zurückgefahren. Das Bauteil 560 wird durch entsprechende Betätigung der Zylinder-Kolben-Anordnung 566 in die Lage gemäss Fig. 8 bewegt, worauf dann durch Betätigung der Zylinder-Kolben-Anordnung 548 der Dorn 542 durch die Bohrung 594 und den Durchgang 592 des Einlegeteils zwecks Durchdringung der Hohlkörperwandung 550 und Bildung eines Loches 522 in die in Fig. 8 dargestellte Lage vorbewegt wird. Die Zeichnung lässt erkennen, dass das resultierende Loch 522 mit dem Durchgang 592 im Einlegeteil 591 fluchtet. Auf diese verhältnismässig einfache Weise besteht die Möglichkeit, zugleich mit der Herstellung des Loches einen zusätzlichen Körper, beispielsweise einen Stutzen, am Hohlkörper anzubringen und fest sowie dicht mit diesem zu verbinden.

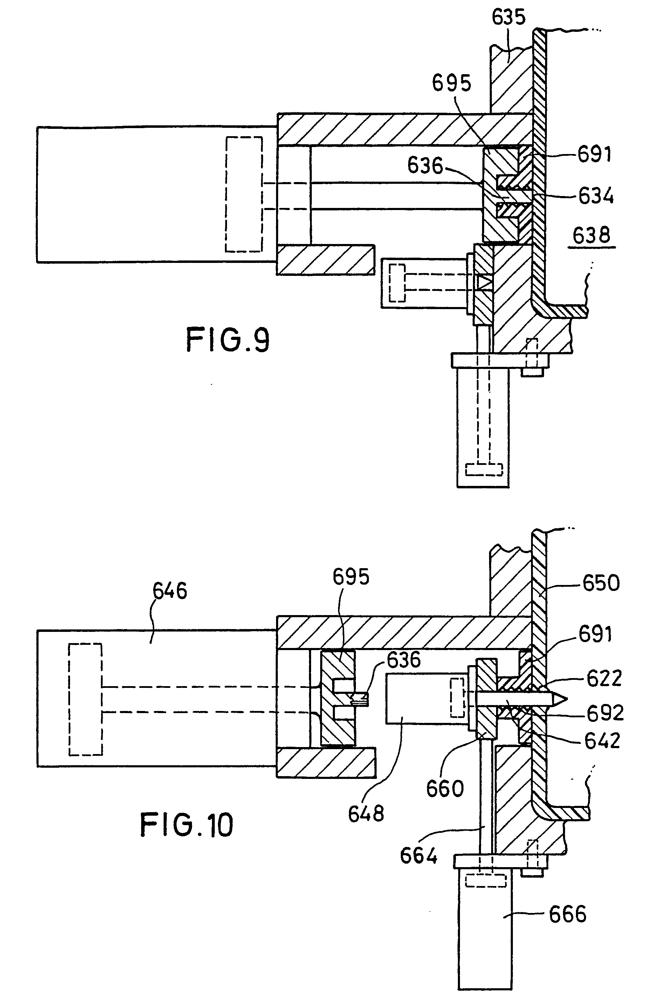

Die Figuren 9 und 10 zeigen eine andere Möglichkeit der Anbringung eines solchen zusätzlichen Körpers, bei dem es sich ebenfalls um ein stutzenartiges Teil handelt. Mit dem Ausführungsbeispiel gemäss Fig. 7 und 8 übereinstimmende Teile sind mit gleichen, jedoch um 600 höheren Bezugszeichen versehen. Das bewegbare Wandteil der Blasform ist hierbei ebenfalls als Dorn 636 ausgebildet, der von einer Halterung 695 getragen wird, die über eine Zylinder-Kolben-Anordnung 646 auf einer Bewegungsbahn hin- und herbewegbar ist, die etwa vertikal zu dem Bereich der Hohlkörperwandung 650 verläuft, an welchem das Loch 622 anzubringen ist. Die Halterung 695 ist dabei zugleich als Sitz für ein Einlegeteil 691 ausgebildet, welches einen mit Innengewinde versehenen Durchgang 692 aufweist. Der als Lochwerkzeug dienende Dorn 642 wird von einem Bauteil 660 getragen und durch eine daran angebrachte Zylinder-Kolben-Anordnung 648 betätigt. Das Bauteil 660 ist an der Kolbenstange 664 einer Zylinder-Kolben-Anordnung 666 angebracht und durch letztere im wesentlichen parallel zu dem mit der Öffnung 622 zu versehenden Bereich der Hohlkörperwandung 650 zwischen den in den Fig. 9 und 10 dargestellten Positionen verschiebbar.

Die Vorrichtung wird in der Weise benutzt, dass das Einlegeteil 691 auf der Halterung 695 derart aufgesetzt wird, dass es relativ zur Halterung 695 die in Fig. 9 der Zeichnung dargestellte Lage einnimmt. Dies kann geschehen, wenn die Halterung 695 die Position gemäss Fig. 10 einnimmt. Alsdann wird das Bauteil 695 mit dem darauf befindlichen Einlegeteil 691 in die in Fig. 9 dargestellte Lage verschoben, in welcher die dem Forminneren 638 zugekehrte Stirnfläche des Einlegeteils 691 und die Stirnfläche 634 des Dornes 636 bündig mit den benachbarten Bereichen der inneren Begrenzung der Formwandung 635 abschliessen. Dabei wird der im Einlegeteil 691 befindliche Durchgang 692 durch den Dorn 636 verschlossen. Die den Dorn 636 umgebenden stirnseitigen Bereiche des Einlegeteiles 691 haben die Funktion von Wandbereichen der Blasform. Es ist möglich, dass bei Vorhandensein eines Innengewindes am Durchgang 692 des Einlegeteils 691 der Dorn 636 nicht überall unmittelbar an der Innenwandung des Durchganges anliegt. Dies spielt jedoch keine Rolle, da der thermoplastische Kunststoff der Hohlkörperwandung 650 auch in heissem Zustand zu viskos ist, als dass er in derartig kleine Öffnungen oder Durchgänge eindringen würde. — Die vorbeschriebene Art der Anbringung des Einlegeteils 691 an der Halterung 695 hat den Vorteil, dass das Einlegeteil von aussen in eine Position gebracht werden kann, von welcher es dann durch die Halterung 695 in die in Fig. 9 dargestellte Endlage verschiebbar ist.

Die Verbindung zwischen Einlegeteil 691 und Wandung 650 des herzustellenden Hohlkörpers geschieht in gleicher Weise wie im Falle der Ausführungsform gemäss den Fig. 7 und 8. Sobald eine Verbindung zwischen Wand 650 und Einlegeteil 691 zustande gekommen ist, wird die Halterung durch entsprechende Betätigung der Zylinder-Kolben-Anordnung 646 von der Wandung 650 weg in die in Fig. 10 dargestellte Position bewegt. Dabei wird der Dorn 636 aus dem Durchgang 692 entfernt, so dass nunmehr das das Lochwerkzeug tragende Bauteil 660 aus seiner in Fig. 9 dargestellten Position in die der Fig. 10 verschoben werden kann. Nach Erreichen derselben wird durch Betätigung der Zylinder-Kolben-Anordnung 648 der Dorn 642 durch den Durchgang 692 des Einlegeteils 691 hindurch unter Bildung des Loches 622 in Richtung auf das Forminnere 638 bewegt.

Es ist selbstverständlich auch möglich, bei den beiden Ausführungsformen gemäss den Fig. 7 und 8 sowie den Fig. 9 und 10 die Öffnung für den Durchgang des Lochwerkzeuges in einen Bereich der Formwandung zu legen, der analog der Ausführung gemäss Fig. 5 nach aussen versetzt ist. Dabei besteht ggf. die Möglichkeit, den Verlauf der inneren Begrenzung der Blasformwandung in diesem Bereich und die Gestalt des Einlegeteiles so zu wählen, dass die Verbindung zwischen dem Einlegeteil und der Wandung des Hohlkörpers nicht nur an der dem Hohlkörper zugewandten Stirnseite des Einlegeteiles, sondern auch an Umfangsbereichen erfolgt.

Entsprechendes gilt auch bei umgekehrter Ausgestaltung des die Öffnung für das Lochwerkzeug tragenden Bereiches der Blasformwandung, d.h., wenn dieser Bereich nach innen in das Formnest 638 hinein gegenüber den benachbarten Bereichen der Formwandung vorsteht.

Ferner können abweichend von den in der Zeichnung dargestellten Ausführungsbeispielen gemäss den Fig. 1-3 die Dorne 36 und 42 auch zueinander achsparallel auf einer verschiebbaren oder drehbaren Halterung angebracht sein, wobei sie wechselweise vor die Öffnung 34 in der Blasformwandung gebracht werden können. Entsprechendes gilt auch für das Ausführungsbeispiel gemäss Fig. 6.

Die Querschnittsform sowohl des in der Hohlkörperwandung herzustellenden Loches und demzufolge auch die Querschnittsform des Lochwerkzeuges brauchen nicht rotationssymmetrisch zu sein. Vielmehr sind auch dreieckige, rechteckige oder sonstige Querschnittsformen denkbar. Daran müssten dann auch die Öffnung in der Blasformwandung und das bewegbare Wandteil angepasst sein. Querschnittsform und Querschnittsabmessungen des Lochwerkzeuges werden zweckmässig an Querschnittsform und Querschnittsabmessungen der Öffnung in der Formwandung angepasst sein, wenngleich dies nicht in allen Fällen notwendig sein wird. So ist eine Ausführung denkbar, bei welcher die Öffnung in der Formwandung kreisförmig ausgebildet und das Lochwerkzeug im Querschnitt z.B. quadratisch ist und der Querschnittsumfang der Öffnung den Hüllkreis des Lochwerkzeuges bildet.

## Patentansprüche

1. Verfahren zum Herstellen eines Hohlkörpers (18) aus thermoplastischem Material im Blasverfahren, dessen Wandung (50) mit wenigstens einem Loch (22) versehen ist, wobei ein vorzugsweise schlauchförmiger Vorformling des Hohlkörpers (18) in eine Blasform (10) gebracht und darin unter Anwendung inneren Überdrucks bis zur Anlage an der inneren Begrenzung (32) der Blasformwandung (35) aufgeweitet wird, worauf die vorzugsweise noch nicht völlig erhärtete Wandung (50) des Hohlkörpers (18) durch ein durch eine Öffnung (34) in der Blasformwandung (35) in das Innere derselben eine Durchdringungsbewegung ausführendes Lochwerkzeug (42) mit dem Loch (22) versehen wird und der Hohlkörper (18) nach ausreichender Abkühlung aus der Blasform (10) entfernt wird, dadurch gekennzeichnet, dass während des Aufweitvorganges und bis zur Herstellung des Lochs (22) zur Abstützung des mit dem Loch (22) zu versehenden Bereiches der Hohlkörperwandung (50) die Öffnung (34) verschlossen bleibt und der die Abstützung bewirkende Bereich (40) der Blasformwandung (35) erst zwecks Freigabe der Öffnung (34) für das Lochwerkzeug (42) entfernt wird.

2. Verfahren nach Anspruch 1, dadurch gekennzeichnet, dass der Zeitpunkt für die Herstellung des Lochs (22) gewählt wird in Abhängigkeit von der Grösse desselben und dem Ausmass der Verfestigung, die das Material bis zu diesem Zeitpunkt erfahren hat.

3. Verfahren nach Anspruch 1 oder 2, dadurch gekennzeichnet, dass auf den mit dem Loch (22) versehenen Bereich der Hohlkörperwandung (50) nach der Freigabe der Öffnung (34) für das Werkzeug (42) von aussen ein über dem Atmosphärendruck liegender Druck zur Einwirkung gebracht wird und/oder der Innendruck unter den normalen Blasdruck, ggf. bis auf Atmosphärendruck, zumindest kurzzeitig verringert wird.

4. Verfahren nach einem der vorhergehenden Ansprüche, dadurch gekennzeichnet, dass das Lochwerkzeug (42) während der Durchdringungsbewegung in Richtung der Längsachse desselben wirksame oszillierende Schwingungen ausführt.

5. Verfahren nach einem der vorhergehenden Ansprüche, dadurch gekennzeichnet, dass das Lochwerkzeug (42) während der Durchdringungsbewegung eine Drehbewegung um seine Längsachse ausführt.

6. Verfahren nach Anspruch 5, dadurch gekennzeichnet, dass die Drehbewegung in einer Richtung ausgeführt wird.

7. Verfahren nach Anspruch 5, dadurch gekennzeichnet, dass die Drehbewegung oszillierend ausgeführt wird.

8. Verfahren nach einem der vorhergehenden Ansprüche, dadurch gekennzeichnet, dass ein Einlegeteil (591) während des Aufweitvorganges mit der Wandung (550) des Hohlkörpers verbunden wird, welches mit einem Durchgang (592) versehen ist, der mit dem Loch (522) in der Wandung (550) des Hohlkörpers fluchtet, und dass der Durchgang (592) im Einlegeteil (591) während des Aufweitvorganges verschlossen bleibt und das Lochwerkzeug (542) durch den im Einlegeteil (591) befindlichen Durchgang (592) zur Durchdringung der Wandung des Hohlkörpers verschoben wird, nachdem der die Abstützung bewirkende, entfernbare Bereich (536) der Blasformwandung aus dem Durchgang (592) entfernt worden ist.

9. Verfahren nach Anspruch 8, dadurch gekennzeichnet, dass das Einlegeteil (591) während des Aufweitvorganges die dem herzustellenden Loch (522) benachbarten Bereiche der Wandung (550) des Hohlkörpers abstützt.

10. Verfahren nach Anspruch 8, dadurch gekennzeichnet, dass der entfernbare, die Abstützung bewirkende Bereich (636) der Wandung das Einlegeteil (691) trägt.

11. Verfahren nach einem der vorhergehenden Ansprüche 8 und 9, dadurch gekennzeichnet, dass der mit dem Loch (522) zu versehende Bereich der Wandung (550) des Hohlkörpers vor Herstellung des Loches (522) mit dem Einlegeteil (591) verbunden wird.

12. Vorrichtung zur Durchführung des Verfahrens gemäss einem der vorhergehenden Ansprüche mit einer Blasform (10), deren Formwandung (35) mit wenigstens einer Öffnung (34) versehen ist, durch die hindurch ein Lochwerkzeug (42) in das Innere der Blasform (10) zur Durchdringung der Wandung (50) des darin befindlichen Hohlkörpers hineinverschiebbar ist, dadurch gekennzeichnet, dass der Blasformwandung (35) im Bereich der Öffnung (34) ein bewegbares Wandteil (36) zugeordnet ist, welches in einer seiner Positionen die in der Bewegungsbahn des Lochwerkzeuges (42) befindliche Öffnung (34) verschliesst und in einer anderen Position die Öffnung (34) freigibt.

13. Vorrichtung nach Anspruch 12, dadurch gekennzeichnet, dass das Lochwerkzeug (42) in bekannter Weise als auf einer an die Öffnung (34) anschliessenden Bewegungsbahn hin- und herbewegbarer Dorn (42) ausgebildet ist.

14. Vorrichtung nach Anspruch 12, dadurch gekennzeichnet, dass das bewegbare Wandteil als auf einer an die Öffnung anschliessenden Bewegungsbahn hin- und herbewegbarer Dorn (36) ausgebildet ist, dessen Querschnitt an seinem dem Blasforminneren (38) zugekehrten Ende dem Querschnitt der Öffnung (34) angepasst ist.

15. Vorrichtung nach Anspruch 14, dadurch gekennzeichnet, dass die beiden Bewegungsbahnen für das verschiebbare Wandteil (36) und das Lochwerkzeug (42) unter einem spitzen Winkel zueinander verlaufen und im Bereich der Öffnung (34) in der Blasformwandung einander schneiden und Wandteil und Lochwerkzeug wechselweise eine in Richtung auf das Blasforminnere (38) vorgeschobene Position einnehmen.

16. Vorrichtung nach Anspruch 14, dadurch gekennzeichnet, dass die beiden Bewegungsbahnen für das verschiebbare Wandteil (536) und das Lochwerkzeug (542) zueinander parallel und vorzugsweise senkrecht zu dem mit dem Loch (522) zu versehenden Bereich der Hohlkörperwandung (550) verlaufen und etwa parallel zu dem mit dem Loch (522) zu versehenden Bereich der Hohlkörperwandung (550) vorzugsweise gemeinsam bewegbar sind.

17. Vorrichtung nach einem der vorhergehenden Ansprüche, dadurch gekennzeichnet, dass das bewegbare Wandteil (160) mit einem Durchgang (162) versehen ist, der in eine Position bringbar ist, in welcher der Durchgang (162) eine Verbindung zwischen Öffnung (134) und Bewegungsbahn für das Lochwerkzeug (142) herstellt.

18. Vorrichtung nach Anspruch 17, dadurch gekennzeichnet, dass das bewegbare Wandteil (160) drehbar angeordnet und im Querschnitt senkrecht zur Drehachse kreisförmig ausgebildet und mit einem radialen Durchgang (162) für das Lochwerkzeug (142) versehen ist, der in einer Winkelstellung des um eine zum Durchgang (162) senkrechte Achse drehbaren Wandteils die Verbindung zwischen Bewegungsbahn des Lochwerkzeuges (142) und der Öffnung (134) in der Blasformwandung (135) herstellt.

19. Vorrichtung nach Anspruch 17, dadurch gekennzeichnet, dass das bewegbare Wandteil (360) um eine zum Durchgang (362) parallele Achse drehbar ist und mit einer seiner Stirnflächen (378) das Innere (338) der Blasform begrenzt.

20. Vorrichtung nach Anspruch 17, dadurch gekennzeichnet, dass das bewegbare Wandteil (260) im wesentlichen parallel zu dem die Öffnung (234) aufweisenden Bereich der Blasformwandung (235) hin- und herverschiebbar ist.

21. Vorrichtung nach einem der vorhergehenden Ansprüche, dadurch gekennzeichnet, dass in einer anderen Position des bewegbaren Wandteils (160) die Öffnung (134) durch das Wandteil (160) verschlossen ist.

22. Vorrichtung nach einem der vorhergehenden Ansprüche, dadurch gekennzeichnet, dass dem bewegbaren Wandteil (360) ein hin- und herbewegbarer Hilfsdorn (382) derart zugeordnet ist, dass in einer Position des Wandteiles, in welcher die Bewegungsbahn des Lochwerkzeuges (336) durch das Wandteil (360) gesperrt ist, der Hilfsdorn (382) zum Verschliessen der dem Blasforminnere (338) zugekehrten Öffnung des Durchganges in diesen einführbar ist.

23. Vorrichtung nach einem der vorhergehenden Ansprüche, dadurch gekennzeichnet, dass die innere Begrenzung (232) der Blasformwandung (235) im Bereich der Öffnung (234) gegenüber den daran angrenzenden Bereichen nach aussen versetzt ist und das bewegbare Wandteil (260) in einer Ausnehmung der Blasformwandung (235) angeordnet ist, die lediglich im Bereich der Öffnung (234) mit dem Inneren der Blasform verbunden ist.

24. Vorrichtung nach einem der vorhergehenden Ansprüche, dadurch gekennzeichnet, dass die Öffnung (534, 634) in der Wandung (535, 635) der Blasform wenigstens an ihrem dem Forminneren (538, 638) zugekehrten Endbereich grösser ist als den Querabmessungen des in der Wandung (550) des Hohlkörpers herzustellenden Loches (522, 622) entspricht und der den Querschnittsbereich des herzustellenden Loches (522, 622) überschreitende Bereich der Öffnung (534, 634) durch ein Einlegeteil (591, 691) verschliessbar ist, durch dessen mit dem herzustellenden Loch (522, 622) fluchtenden Durchgang (592, 692) das Lochwerkzeug (542, 642) in Richtung auf das Innere (538, 638) der Blasform verschiebbar ist.

25. Vorrichtung nach Anspruch 24, dadurch gekennzeichnet, dass das bewegbare Wandteil (636), welches in seiner einen Position die Öffnung (634) verschliesst, an seinem dem Inneren der Blasform zugekehrte Ende mit einem Sitz für das Einlegeteil (691) versehen ist und in seiner dem Inneren (638) der Blasform zugekehrten Position den Durchgang (692) im Einlageteil (691) verschliesst.

26. Vorrichtung nach einem der vorhergehenden Ansprüche, dadurch gekennzeichnet, dass das Einlegeteil (591) vom Inneren (538) der Blasform her in die Ausnehmung in der Blasformwandung (535) einsetzbar ist.

27. Vorrichtung nach einem der vorhergehenden Ansprüche, dadurch gekennzeichnet, dass das Lochwerkzeug um seine Längsachse drehbar angeordnet ist.

28. Vorrichtung nach einem der vorhergehenden Ansprüche, dadurch gekennzeichnet, dass das Lochwerkzeug oszillierend parallel zu seiner Längsachse hin- und herbewegbar angeordnet ist.

**Claims**

1. A method of producing a hollow body (18) of thermoplastic material by blow moulding, the wall (50) of the hollow body being provided with at least one hole (22), wherein a preferably tubular preform for the hollow body (18) is introduced into a blowing mould (10) and expanded therein using an internal increased pressure until it bears against the inner surface (32) of the blowing mould wall (35) whereupon the preferably not yet completely hardened wall (50) of the hollow body (18) is provided with the hole (22) by a perforating tool (42) which performs a penetration movement through an opening (34) in the blowing mould wall (35) into the interior thereof and the hollow body (18) is removed from the blowing mould (10) after sufficient cooling, characterised in that during the expansion operation and up to the production of the hole (22), in order to support the region of the wall (50) of the hollow body which is to be provided with the hole (22), the opening (34) remains closed and the region (40) of the blowing mould wall (35) which provides the support is first removed to open the opening (34) for the perforating tool (42).

2. A method according to claim 1 characterised in that the time for producing the hole (22) is selected in dependence on the size thereof and the degree of solidification that the material has experienced up to that time.

3. A method according to claim 1 or claim 2 characterised in that a pressure which is above atmospheric pressure is caused to act from the outside on the region of the wall (50) of the hollow body, which is provided with the hole (22), after opening of the opening (34) for the tool (42), and/or the internal pressure is at least briefly reduced below the normal blow moulding pressure, possibly to atmospheric pressure.

4. A method according to one of the preceding claims characterised in that during the penetration movement the perforating tool (42) performs oscillating motions which are effective in the direction of the longitudinal axis thereof.

5. A method according to one of the preceding claims characterised in that during the penetration movement the perforating tool (42) performs a rotary movement about its longitudinal axis.

6. A method according to claim 5 characterised in that the rotary movement is performed in one direction.

7. A method according to claim 5 characterised in that the rotary movement is performed in an oscillating manner.

8. A method according to one of the preceding claims characterised in that during the expansion operation an insert member (591) is connected to the wall (550) of the hollow body, which is provided with a passage (592) which aligns with the hole (522) in the wall (550) of the hollow body, and that the passage (592) in the insert member (591) remains closed during the expansion operation and the perforating tool (542) is displaced through the passage (592) in the insert member (591) to penetrate the wall of the hollow body after the removable portion (536) of the blowing mould wall, which provides the support action, has been removed from the passage (592).

9. A method according to claim 8 characterised in that during the expansion operation the insert member (591) supports the regions of the wall (550) of the hollow body, which are adjacent to the hole (522) to be produced.

10. A method according to claim 8 characterised in that the removable region (636) of the wall, which provides the support effect, carries the insert member (691).

11. A method according to one of claims 8 and 9 characterised in that the region of the wall (550) of the hollow body, which is to be provided with the hole (522), is connected to the insert member (591) prior to production of the hole (522).

12. Apparatus for carrying out the method according to one of the preceding claims comprising a blowing mould (10) whose mould wall (35) is provided with at least one opening (34) through which a perforating tool (42) can be pushed into the interior of the blowing mould (10) to penetrate the wall (50) of the hollow body disposed therein, characterised in that associated with the blowing mould wall (35) in the region of the opening (34) is a movable wall portion (36) which in one of its positions closes the opening (34) disposed in the path of movement of the perforating tool (42) and in another position opens the opening (34).

13. Apparatus according to claim 12 characterised in that the perforating tool (42) is formed in known manner as a mandrel (42) which is reciprocatable on a path of movement adjoining the opening (34).

14. Apparatus according to claim 12 characterised in that the movable wall portion is in the form of a mandrel (36) which is reciprocatable on a path of movement adjoining the opening and whose cross-section is adapted at its end towards the interior (38) of the blowing mould, to the cross-section of the opening (34).

15. Apparatus according to claim 14 characterised in that the two paths of movement for the displaceable wall portion (36) and the perforating tool (42) extend at an acute angle to each other and intersect each other in the region of the opening (34) in the blowing mould wall and the wall portion and the perforating tool alternately occupy a position of being moved forward towards the interior (38) of the blowing mould.

16. Apparatus according to claim 14 characterised in that the two paths of movement for the displaceable wall portion (536) and the perforating tool (542) extend parallel to each other and preferably perpendicularly to the region of the wall (550) of the hollow body, which is to be provided with the hole (522), and are preferably jointly movable substantially parallel to the region of the wall (550) of the hollow body, which is to be provided with the hole (522).

17. Apparatus according to one of the preceding claims characterised in that the movable wall portion (160) is provided with a passage (162) which can be brought into a position in which the passage (162) forms a communication between the opening (134) and the path of movement for the perforating tool (142).

18. Apparatus according to claim 17 characterised in that the movable wall portion (160) is arranged rotatably and is of a circular configuration in cross-section perpendicularly to the axis of rotation and is provided with a radial passage (162) for the perforating tool (142), which, in an angular position of the wall portion which is rotatable about an axis perpendicular to the passage (162), provides the communication between the path of movement of the perforating tool (142) and the opening (134) in the blowing mould wall (135).

19. Apparatus according to claim 17 characterised in that the movable wall portion (360) is rotatable about an axis parallel to the passage (362) and with one of its end faces (378) delimits the interior (338) of the blowing mould.

20. Apparatus according to claim 18 characterised in that the movable wall portion (260) is reciprocatable substantially parallel to the region of the blowing mould wall (235) which has the opening (234).

21. Apparatus according to one of the preceding claims characterised in that in another position of the movable wall portion (160) the opening (134) is closed by the wall portion (160).

22. Apparatus according to one of the preceding claims characterised in that a reciprocatable auxiliary mandrel (382) is associated with the movable wall portion (360) in such a way that in a position of the wall portion in which the path of movement of the perforating tool (366) is blocked by the wall portion (360), the auxiliary mandrel (382) can be introduced into the passage to close the opening of the passage which is towards the interior (338) of the blowing mould.

23. Apparatus according to one of the preceding claims characterised in that the inner surface (232) of the blowing mould wall (235) is displaced outwardly in the region of the opening (234) relative to the regions adjoining same and the movable wall portion (260) is arranged in a recess in the blowing mould wall (235), which is only connected to the interior of the blowing mould in the region of the opening (234).

24. Apparatus according to one of the preceding claims characterised in that the opening (534, 634) in the wall (535, 635) of the blowing mould is larger at least at its end region towards the mould interior (538, 638), than corresponds to the transverse dimensions of the hole (522, 622) to be made in the wall (550) of the hollow body, and the region of the opening (534, 634) which exceeds the cross-sectional region of the hole (522, 622) to be produced can be closed by an insert member (591, 691) wherein the perforating tool (542, 642) is displaceable towards the interior (538, 638) of the blowing mould through the passage (592, 692) in the insert member (591, 691), which is aligned with the hole (522, 622) to be produced.

25. Apparatus according to claim 24 characterised in that the movable wall portion (636) which in its one position closes the opening (634) is provided with a seat for the insert member (691) at its end which is towards the interior of the blowing mould and closes the passage (692) in the insert member (691) in its position towards the interior (638) of the blowing mould.

26. Apparatus according to one of the preceding claims characterised in that the insert member (591) can be inserted from the interior (538) of the blowing mould into the recess in the blowing mould wall (535).

27. Apparatus according to one of the preceding claims characterised in that the perforating tool is arranged rotatably about its longitudinal axis.

28. Apparatus according to one of the preceding claims characterised in that the perforating tool is arranged to reciprocate with an oscillating movement parallel to its longitudinal axis.

## Revendications

1. Procédé pour confectionner par soufflage un corps creux (18) an matière thermoplastique, dont la paroi (50) présente au moins un trou (22), en partant d'une ébauche de préférence tubulaire du corps creux (18) que l'on met dans un moule de soufflage (10) pour en assurer l'expansion sous l'effet d'une surpression interne, jusqu'à appliquer cette ébauche sur la face interne (32) de la paroi (35) du moule de soufflage, le trou (22) étant ensuite réalisé dans la paroi (50) du corps creux (18), qui de préférence n'est pas encore complètement durcie, au moyen d'un outil de perçage (42) qu'on fait pénétrer à l'intérieur du moule de soufflage (10) par une ouverture (34) ménagée dans la paroi (35) du moule, et le corps creux (18) étant alors extrait de son moule de soufflage (10) après un refroidissement suffisant, procédé caractérisé en ce qu'on maintient obturée l'ouverture (34) pendant la phase d'expansion et jusqu'à la réalisation du trou (22), afin de soutenir la partie de la paroi (50) du corps creux dans laquelle doit se trouver le trou (22), et en ce qu'on enlève la partie (40) de la paroi (35) du moule de soufflage qui sert à soutenir la paroi du corps creux, seulement au moment de libérer l'ouverture (34) servant au passage de l'outil de perçage (42).

2. Procédé selon la revendication 1, caractérisé en ce qu'on choisit l'instant de réalisation du trou (22) en fonction de l'importance de celui-ci et du taux de raffermissement de la matière thermoplastique à l'instant considéré.

3. Procédé selon l'une des revendications 1 ou 2, caractérisé en ce qu'on applique par l'extérieur une pression supérieure à la pression atmosphérique, à l'endroit de la paroi (50) du corps creux où doit se trouver le trou (22), après avoir libéré l'ouverture (34) prévue pour le passage de l'outil (42), et/ou en ce qu'on réduit la valeur de la pression interne en-dessous de la pression normale de soufflage, éventuellement jusqu'à la valeur de la pression atmosphérique, au moins pour un temps réduit.

4. Procédé selon l'une des revendications 1 à 3, caractérisé en ce qu'on imprime des oscillations à l'outil de perçage (42) dans le sens de son axe longitudinal pendant son mouvement de pénétration.

5. Procédé selon l'une des revendications 1 à 4, caractérisé en ce qu'on fait tourner l'outil de perçage (42) autour de son axe longitudinal pendant son mouvement de pénétration.

6. Procédé selon la revendication 5, caractérisé en ce qu'on fait tourner l'outil de perçage (42) dans un seul sens.

7. Procédé selon la revendication 5, caractérisé en ce que le mouvement de rotation de l'outil (42) est oscillant.

8. Procédé selon l'une des revendications 1 à 7, caractérisé en ce qu'on utilise pendant la phase d'expansion une pièce rapportée (591) destinée à être fixée à la paroi (550) du corps creux, et pourvue d'un passage (592) qui coïncide exactement avec le trou (522) à réaliser dans la paroi (550) du corps creux, ce passage (592) ménagé dans la pièce rapportée (591) restant obturé pendant la phase d'expansion, et en ce qu'on fait ensuite pénétrer l'outil de perçage (542) dans le passage (592) de la pièce rapportée (591), pour perforer la paroi du corps creux, après avoir écartée du passage (592) la partie mobile (536) de la paroi du moule de soufflage qui a servi à soutenir la paroi du corps creux.

9. Procédé selon la revendication 8, caractérisé en ce que la pièce rapportée (591) sert à soutenir, pendant la phase d'expansion, la partie de la paroi (550) du corps creux qui est voisine du trou (522) à réaliser.

10. Procédé selon la revendication 8, caractérisé en ce que la pièce rapportée (691) est portée par la partie mobile (636) de la paroi du moule qui sert à soutenir la paroi du corps creux.

11. Procédé selon l'une des revendications 8 et 9, caractérisé en ce que la partie de la paroi (550) du corps creux où doit se situer le trou (522) est reliée à la pièce rapportée (591) avant la réalisation du trou (522).

12. Dispositif pour la mise en oeuvre du procédé conforme à l'une des revendications 1 à 11, comportant un moule de soufflage (10), dont la paroi de moulage (35) est pourvue d'au moins une ouverture (34) pour le passage d'un outil de perçage (42) qui est prévu pour pénétrer par coulissement à l'intérieur du moule de soufflage (10), afin de perforer la paroi (50) du corps creux contenu dans ce moule, dispositif caractérisé en ce que la paroi (35) du moule de soufflage comporte dans la région de l'ouverture (34) une partie mobile (36), adaptée à obturer dans l'une de ses positions l'ouverture (34) située sur le trajet de l'outil de perçage (42), et à libérer cette ouverture (34) dans une autre position.

13. Dispositif selon la revendication 12, caractérisé en ce que l'outil de perçage (42) est constitué d'une manière connue par un poinçon (42), pouvant être animé d'un mouvement de va-et-vient sur une trajectoire qui coïncide avec l'ouverture (34).

14. Dispositif selon la revendication 12, caractérisé en ce que la partie mobile de la paroi du moule de soufflage est constituée par une broche (36) pouvant être animée d'un mouvement de va-et-vient sur une trajectoire qui coïncide avec l'ouverture (34), la section de cette broche à l'endroit de son extrémité orientée vers l'intériewur (38) du moule de soufflage correspondant à la section de l'ouverture (34).

15. Dispositif selon la revendication 14, caractérisé en ce que la trajectoire de la partie mobile (36) de la paroi et la trajectoire de l'outil de perçage (42) se coupent suivant un angle aigu, à l'endroit d'un point situé dans la zone de l'ouverture (34) de la paroi du moule de soufflage, et en ce que la partie mobile de la paroi et l'outil de perçage peuvent prendre à tour de rôle une position d'enfoncement, en direction de l'intérieur (38) du moule de soufflage.

16. Dispositif selon la revendication 14, caractérisé en ce que les deux trajectoires, prévues respectivement pour la partie mobile (536) de la paroi et pour l'outil de perçage (542), sont parallèles entre elles et de préférence perpendiculaires à la zone de la paroi (550) du corps creux où doit être réalisé le trou (522), ces deux trajectoires pouvant être déplacées de préférence ensemble dans une direction sensiblement parallèle à la zone (550) de la paroi du corps creux où doit être réalisé le trou (522).

17. Dispositif selon l'une des revendications précédentes, caractérisé en ce que la partie mobile (160) de la paroi présente un passage (162), adapté à être amené dans une position dans laquelle ce passage met en communication l'ouverture (134) et la trajectoire prévue pour l'outil de perçage (142).

18. Dispositif selon la revendication 17, caractérisé en ce que la partie mobile (160) de la paroi est montée rotativement, et présente une section circulaire dans un sens perpendiculaire à son axe de rotation, un passage radial (162) étant prévu dans cette partie mobile pour l'outil de perçage (142), ce passage radial mettant en communication la trajectoire de l'outil de perçage (142) et l'ouverture (134) de la paroi (135) du moule de soufflage, dans une position angulaire déterminée de la partie de la paroi qui peut tourner suivant un axe perpendiculaire au passage (162).

19. Dispositif selon la revendication 17, caractérisé en ce que la partie mobile (360) de la paroi est montée rotativement suivant un axe parallèle au passage (362), la face antérieure (378) de cette partie mobile limitant le volume interne (338) du moule de soufflage.

20. Dispositif selon la revendication 18, caractérisé en ce que la partie mobile (260) de la paroi peut être animée d'un mouvement de va-et-vient, sensiblement parallèle à la zone de la paroi (235) du moule de soufflage située en regard de l'ouverture (234).

21. Dispositif selon l'une des revendications précédentes, caractérisé en ce que l'ouverture (134) est obturée par la partie mobile (160) de la paroi, dans une autre position de cette partie mobile.

22. Dispositif selon l'une des revendications précédentes, caractérisé en ce qu'une broche auxiliaire (382) pouvant être animée d'un mouvement de va-et-vient est associée à la partie mobile (360) de la paroi, de telle manière que dans une position de la partie mobile (360) de la paroi, où cette partie mobile obture la trajectoire de l'outil de perçage (336), on peut engager la broche auxiliaire (382) dans le passage, pour obturer l'ouverture de celui-ci en regard de l'intérieur (338) du moule de soufflage.

23. Dispositif selon l'une des revendications précédentes, caractérisé en ce que la face interne (232) de la paroi (235) du moule de soufflage est déformée vers l'extérieur dans la zone de l'ouverture (234), par rapport aux parties avoisinantes de cette paroi, et en ce que la partie mobile (260) de la paroi est logée dans un évidement de la paroi (235) du moule de soufflage, cet évidement ne communiquant avec l'intérieur du moule de soufflage que dans la région de l'ouverture (234).

24. Dispositif selon l'une des revendications précédentes, caractérisé en ce que l'ouverture (534, 634) de la paroi (535, 635) du moule de soufflage présente une étendue qui dépasse les dimensions transversales du trou (522, 622) à réaliser dans la paroi (550, 650) du corps creux, et en ce que la zone de l'ouverture (534, 634) qui déborde transversalement au-delà de la section du trou à réaliser (522, 622) peut être obturée par une pièce rapportée (591, 691), celle-ci présentant un passage (592, 692) qui coïncide exactement avec le trou à réaliser (522, 622), et à travers lequel on peut faire passer l'outil de perçage (542, 642) pour l'enfoncer vers l'intérieur (538, 638) du moule de soufflage.

25. Dispositif selon la revendication 24, caractérisé en ce que la partie mobile (636) de la paroi, prévue pour obtenir l'ouverture (634) dans une position, est pourvue à son extrémité orientée vers l'intérieur du moule de soufflage, d'un siège d'appui pour la pièce rapportée (691), cette partie mobile (636) obturant le passage (692) ménagé dans la pièce rapportée (691), dans sa position située vers l'intérieur (638) du moule de soufflage.

26. Dispositif selon l'une des revendications précédentes, caractérisé en ce que la pièce rapportée (591) est adaptée à se monter dans l'évidement de la paroi (535) du moule de soufflage, à partir de l'intérieur (538) de ce moule.

27. Dispositif selon l'une des revendications précédentes, caractérisé en ce que l'outil de perçage est monté de manière à pouvoir tourner autour de son axe longitudinal.

28. Dispositif selon l'une des revendications précédentes, caractérisé en ce que l'outil de perçage peut effectuer un mouvement oscillant de va-et-vient dans le sens de son axe longitudinal.

FIG. 1

0 139 841

FIG.2

FIG.3

FIG.4

FIG.5

FIG.6

FIG.7

FIG.8

FIG.9

FIG.10